Europäisches Patentamt

**European Patent Office**

Office européen des brevets

(11) Numéro de publication: **0 026 708**
**B1**

(12) **FASCICULE DE BREVET EUROPEEN**

(45) Date de publication du fascicule du brevet:
**25.05.83**

(51) Int. Cl.³: **H 04 N 7/00**

(21) Numéro de dépôt: **80401367.0**

(22) Date de dépôt: **25.09.80**

(54) Système de diffusion de données et équipement de réception utilisé dans un tel système.

(30) Priorité: **27.09.79 FR 7924570**

(43) Date de publication de la demande:
**08.04.81 Bulletin 81/14**

(45) Mention de la délivrance du brevet:
**25.05.83 Bulletin 83/21**

(84) Etats contractants désignés:
**BE DE GB NL**

(56) Documents cités:
**FR-A-2 313 825**
**FR-A-2 393 480**
**FR-A-2 404 350**

(73) Titulaire: **Etablissement Public de Diffusion dit "Télédiffusion de France", 21-27 rue Barbès, F-92120 Montrouge (FR)**
Titulaire: **L'Etat Français représenté par le Secrétaire d'Etat aux Postes et Télécommunications, (Centre National d'Etudes des Telecommunications) 38-40 rue du Général Leclerc, F-92131 Issy-les-Moulineaux (FR)**

(72) Inventeur: **Noirel, Yves Maurice, Le Chesnot-Breteil, F-35550 Montfort (FR)**

(74) Mandataire: **Le Guen, Louis François, 13, rue Emile Bara BP 91, F-35802 Dinard Cedex (FR)**

BUNDESDRUCKEREI BERLIN

# Système de diffusion de données et équipement de réception utilisé dans un tel système

La présente invention concerne un système de transmission unidirectionnel de données.

Parmi les systèmes de transmission unidirectionelle de données du type de celui de la présente invention, on peut citer le brevet français 2 313 825 et le 1er certificat d'addition 2 393 480.

Dans le système de transmission unidirectionelle ou de télédiffusion de données des demandes de brevet principal et de 1er certificat d'addition mentionnées ci-dessus, les données transmises sont arrangées en paquets, chaque paquet ayant, au maximum, la durée active d'une ligne d'image de télévision. Les paquets sont insérés, soit à la place des signaux d'image, soit des lignes de retour en trame, entre les signaux de synchronisation classiques des lignes de télévision.

Chaque paquet diffusé commence par un préfixe contenant, outre des signaux de synchronisation d'éléments binaires et d'octets classiques et des signaux de code d'indentification de voie, un signal de format de paquet indiquant la longueur de la suite de données qui suit le préfixe. Plus précisément, dans le paquet, les données utiles et les données qui composent le préfixe sont groupées en octets. Donc, le signal de format est un octet qui indique le nombre d'octets de données utiles qui suit le préfixe.

Les essais effectués sur un système de transmission conforme au système défini ci-dessus et utilisant comme support de transmission un réseau public de télédiffusion ont montré qu'il était nécessaire de protéger les données du paquet contre les erreurs de transmission, la même conclusion étant valable pour les informations contenues dans le préfixe. Comme le paquet est formé d'octets, il est particulièrement simple de prévoir une protection contre les erreurs et une correction d'erreurs octet par octet. Il est alors naturel d'adopter une structure d'octets conforme à un code de Hamming, c'est-à-dire une structure dans laquelle, par exemple, les éléments binaires b1, b3, b5 et b7 sont réservés à la correction d'erreurs tandis que les éléments binaires b2, b4, b6 et b8 portent les données.

Si on ne veut pas allonger indûment le préfixe, il apparaîtra qu'un seul octet de format, ne comportant que quatre éléments binaires utiles, ne peut servier à compter que jusqu'à 16. Or le nombre des octets qui suivent un préfixe peut, comme on l'a décrit dans les demandes mentionnées ci-dessus, dépasser largement cette valeur.

Un objet de la présente invention consiste à prévoir un système permettant, en utilisant un convention prédéterminée, de n'utiliser qu'un seul octet de format, dans chaque préfixe de paquet, l'octet de format comprenant quatre éléments binaires porteurs d'information et quatre éléments binaires de correction d'erreurs éventuelles de transmission, pour des paquets de données utiles comportant plus de seize octets et, en particulier, jusqu'à cinquante et un octet utiles.

Suivant une caractéristique de la présente invention, il est prévu un système de diffusion de données dans lequel la station émettrice diffuse sous forme de paquets, des données numériques provenant éventuellement de plusieurs voies, chaque paquet comportant un préfixe contenant, outre des signaux de synchronisation classiques et de ocde d'identification de voie, un signal de format de paquet indiquant la longueur de la suite de données qui suit le préfixe, la station émettrice comportant autant de coupleurs que de voies, chaque coupleur comprenant un circuit d'entrée dont l'entrée est reliée à la sortie de la voie associée au coupleur et dont la sortie est reliée à une mémoire de données dont la sortie peut être connectée à un circuit de multiplexage sous la commande d'un circuit de commande commun à tous les coupleurs, et un compteur alimenté à une cadence prédéterminée, l'ordre d'inhibition du circuit d'entrée étant donné soit dès que ladite mémoire est pleine, soit dès que ledit compteur a atteint un compte prédéterminé, après quoi ladite mémoire est connectée au circuit de multiplexage, puis vidée, ledit compteur est remis à zéro et l'ordre d'inhibition supprimé, un registre ayant une capacité maximale ajustable provoquant ledit ordre d'inhibition quand le compte desdites données atteint une valeur prédéterminée, caractérisé en ce qu'entre ladite mémoire et ledit circuit d'entrée est prévue une mémoire tampon de petite capacité, la lecture des données de la mémoire tampon étant commandée par un programmateur.

Suivant une autre caractéristique, il est prévu un équipement de réception du système de diffusion de données, dans lequel les signaux qui suivent le préfixe, quand celui-ci y est accepté, sont envoyés dans une mémoire tampon dont la sortie est reliée à un circuit de sortie, avec un registre de signal de format emmagasinant le signal de format du préfixe de chaque paquet reçu et un compteur alimenté par un signal d'horloge à la fréquence des octets qui, quand il atteint un còmpte maximal, vide la séquence des données de la mémoire tampon dans le circuit de sortie, la longueur de la séquence étant limitée par le contenu dudit registre de format, caractérisé en ce que le registre de format est alimenté par un circuit de transcodage traitant le signal de format diffusé.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la fig. 1 représente le bloc-diagramme d'un système de diffusion de données dans lequel sont apportés les perfectionnements suivant l'invention,

la fig. 2 est un diagramme de paquets de données permettant d'illustrer le fonctionnement du système de la fig. 1,

la fig. 3 est un bloc-diagramme de la partie logique de l'équipement d'émission,

la fig. 4 est un schéma d'un circuit compteur du coupleur de la fig. 3,

la fig. 5 est un bloc-diagramme d'un équipement de réception de données, et

la fig. 6 est un schéma d'un circuit de transcodage de l'équipement de réception de la fig. 5.

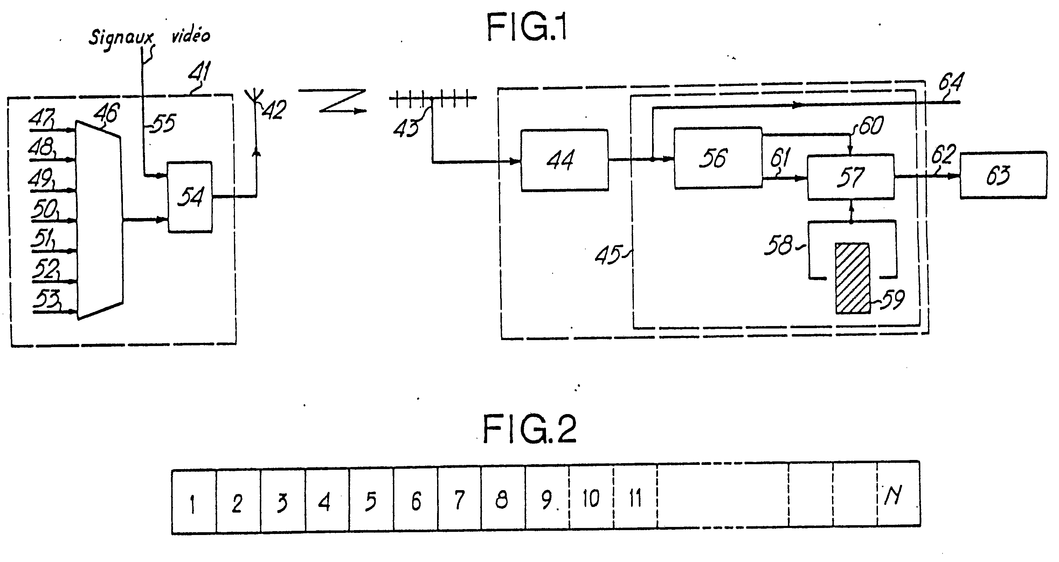

Le système de diffusion de données de la fig. 1 comprend une station émettrice comportant un équipement d'émission 41 et une antenne de télédiffusion 42, ainsi qu'une pluralité de postes récepteurs d'abonnés comportant une antenne de réception 43, un récepteur de télévision 44 et un équipement de réception de données 45.

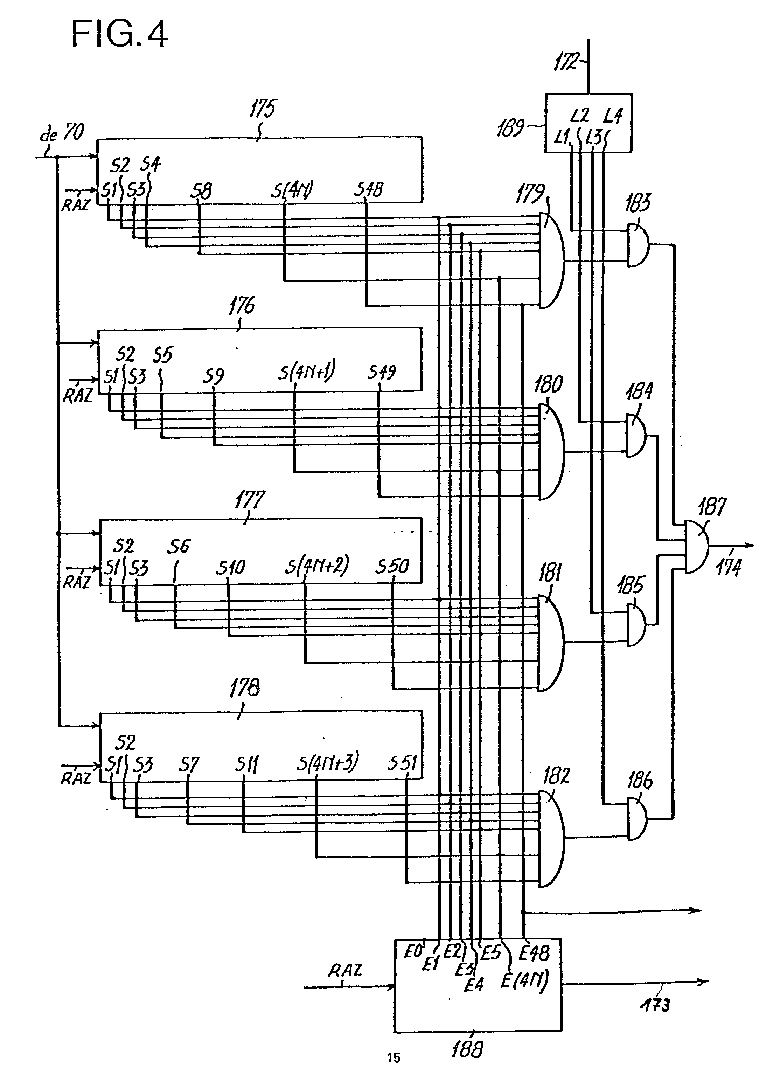

L'équipement d'émission 41 comprend une unité 46 dite »gérant«, lequel est chargé de multiplexer dans le temps les messages de données provenant d'une pluralité de sources de données qui, dans l'exemple décrit, est supposée limitée à sept sources 47 à 53. L'équipement 41 comprend encore une partie modulation 54 qui reçoit, d'une part, les signaux transmis par le gérant et, d'autre part, des signaux vidéo par une liaison 55, et qui transmet des signaux à un émetteur classique, non montré, qui alimente l'antenne 42. A titre d'exemple, on trouvera la description d'une partie modulation 54, qui ne fait pas partie de la présente invention, dans le brevet principal FR-A-2 313 825, déjà citée, et, en particulier, en relation avec la fig. 4 de celle-ci.

Les données transmises par le gérant 46 sont arrangées en paquets. Dans la partie modulation 54, les paquets sont insérés à la place des signaux d'image, entre les signaux de synchronisation classiques des lignes de télévision.

La fig. 2 montre un exemple de paquets de données transmis par le gérant 46, puis, après modulation, par l'antenne 42.

Le paquet a une longueur de N octets numérotés de 1 à N et se compose de deux parties. La première partie, appelée préfixe, est élaborée sous le contrôle du gérant 46 et est constituée, dans l'exemple montré, des huit premiers octets 1 à 8. La seconde partie, constituée des octets 9 à N, avec $N-9=M$, constitue les données proprement dites du paquet. Le nombre N reste toujours inférieur à un nombre Nmax qui peut varier, suivant le standard du réseau de télévision qui assure la télédiffusion, et peut être déterminé par optimisation, compte tenu de la longueur de la ligne utile de télévision et de la bande passante. Ainsi, dans le standard français à 625 lignes, Nmax peut atteindre 40, ce qui correspond à la norme L récommandé par le CCIR.

Dans le préfixe, les octets 1 et 2 sont réservés à la synchronisation des éléments binaires du paquet et se composent chacun de la séquence des éléments binaires 10101010. L'octet 3 dit de »début« permet classiquement d'effectuer la synchronisation octet par octet et peut correspondre à la séquence 11100111. Les octets 4, 5 et 6 sont réservés à l'identification de la voie numérique et sont élaborés sous forme codées par le gérant 46. L'octet 7 dit de »continuité« permet de compter les numéros ou indices de paquets de 1 à 15 et donc de rendre compte des omissions de paquets ou d'erreurs dans l'équipement de réceptions. Enfin, l'octet 8 indique le »format« du paquet, c'est à dire le nombre d'octets M qui suivent le préfixe pour former le paquet.

En se référant à nouveau à la fig. 1, le récepteur de télévision 44 transmet, par sa sortie vidéo, les signaux vidéo à l'équipement 45. Celui-ci comprend une partie démodulation 56, une partie logique 57 et un lecteur 58 d'un support codé 59. La partie démodulation 56 délivre à 57 un signal de fréquence d'éléments binaires (ebs) par 60 et les $(N-3)\times 8$ derniers ebs du paquet de N octets par 61. Les informations lues par le lecteur 58 sont appliquées en permanence 57. En ce qui concerne le rôle du support codé 59, on pourra se reporter utilement au brevet français 2 313 825. La partie réception 57 délivre en 62 les octets des données du paquet à un terminal approprié, tel que 63, tandis que le signal vidéo délivré par 44 est encore disponible en 64.

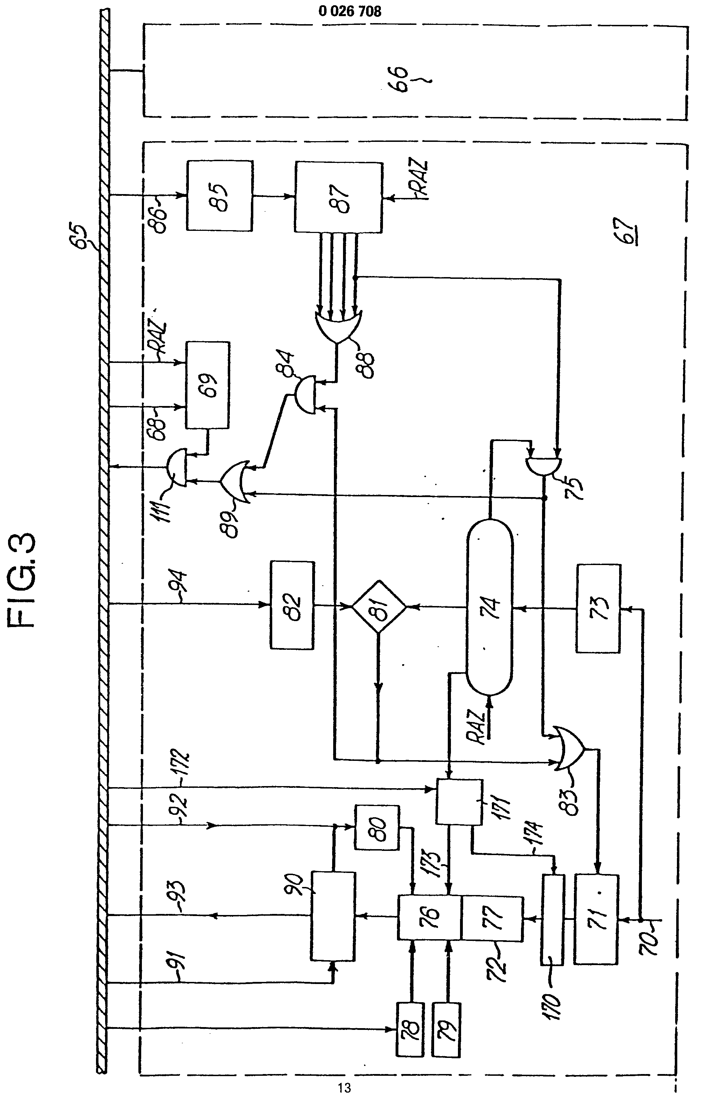

La fig. 3 montre une ligne omnibus 65, un circuit de commande 66 et l'un, parmi une pluralité de coupleurs 67, reliant les sources 47 à 53 à la ligne 65. En pratique, la ligne 65, le circuit 66 et les coupleurs 67 constituent le gérant 46, fig. 1. Le circuit de commande 66 est relié à 65 et peut commander aux coupleurs 67 de se connecter à 65. Le circuit 66 ne sera pas décrit en détail car il est identique au circuit 76 de la fig. 3 du brevet français 2 313 825. On rappellera simplement que le circuit 66 émet, sous forme d'adresses, des interrogations vers les coupleurs afin de collecter les identités des coupleurs prêts à émettre, puis émet successivement des ordres de transmission vers ces coupleurs.

Dans le coupleurs 67, les interrogations issues de 66 entrent par la liaison 68 reliée à un circuit d'identification d'adresse 69 comprenant les composants 90, 92 et 126 de la fig. 3 du brevet principal FR-A-2 313 825. Le circuit 69 a sa sortie reliée à la première entrée d'une porte ET 111 dont la sortie est reliée à 65.

Les données provenant de la source associée au coupleur 67 sont transmises par une jonction 70 du type de celle décrite dans le brevet français 2 268 308, intitulé »Dispositif d'interface normalisée de communications«. Par la jonction 70 les données entrent, en octets parallèles, dans un circuit logique d'entrée 71 dont la sortie est reliée à une mémoire tampon intermédiaire 170 dont la sortie est reliée à l'entrée d'une mémoire tampon 72. Par ailleurs, le fil de service »aller« de la liaison 70, qui transmet un changement d'état pour chaque octet transmis par 70, est relié à l'entrée d'un compteur d'octets 73 dont la sortie est reliée à un registre 74 qui contient le nombre d'octets transmis par 71 à la mémoire tampon intermédiaire 170. Le registre 74 a une entrée de remise à zéro (RAZ) reliée à la ligne 65, une

3

sortie reliée à la première entrée d'une porte ET 75 et une sortie reliée à l'entrée d'un compteur à mémoire 171. Le compteur 171 a une entrée de commande reliée, par une liaison 172, à la ligne 65 et sa sortie reliée à la mémoire 72.

La mémoire tampon 72 comprend deux parties, l'une 76 dans laquelle sont enregistrée les octets du préfixe de paquet et l'autre 77 dans laquelle sont enregistrés des octets de données provenant de la source par 71 et 170. la partie 76 a une première entrée reliée à une mémoire 78 qui contient les octets 1 à 3 de synchronisation et de début, une seconde entrée reliée à une mémoire 79 qui contient les trois octets 4 à 6 d'identification de chaque préfixe de paquet, une troisième entrée reliée à un compteur de paquets 80 qui délivre le numéro du paquet, c'est-à-dire l'octet de continuité, et une quatrième entrée reliée au compteur 171 qui délivre, au moment de la transmission, le compte des octets contenus dans la partie 77, c'est-à-dire l'octet de format.

Une sortie du registre 74 est également reliée à la première entrée d'un comparateur 81 dont la seconde entrée est reliée à la sortie d'une mémoire 82 contenant le nombre $Mmax = Nmax - 8$, qui coresspond au nombre maximal des octets de données pouvant être transmis dans un paquet. La sortie de 81 est reliée, d'une part, à une entrée d'une porte OU 83 et, d'autre part, à la première entrée d'une porte ET 84. La sortie de la porte OU 83 est reliée à une entrée d'inhibition du circuit 71.

Le coupleur comprend encore un circuit de simulation 85, qui reçoit une indication de vitesse provenant de 66 par 65 et une liaison 86. Cette indication de vitesse dépend de la vitesse de fonctionnement des équipements de réception capables de recevoir les données de la source associée au coupleur. Avec cette information de vitesse, le simulateur 85 simule des vidages de la mémoire tampon 72, ces vidages étant comptés dans un compteur 87 relié à la sortie de 85. Les sorties de compte 1 à 4 de 87 sont reliées aux entrées d'une porte OU 88 dont la sortie est reliée à la seconde entrée de la porte ET 84. De plus, la sortie »4« de 87 est reliée à la seconde entrée de la porte ET 75. Les sorties des portes ET 75 et 84 sont respectivement reliées aux entrées d'une porte OU 89 dont la sortie est reliée à la seconde entrée de la porte ET 111. La sortie de la porte ET 75 est encore reliée à une entrée de la porte OU 83.

La sortie de la mémoire 72 est reliée à un circuit logique d'émission 90 qui reçoit de 65, par la liaison 91, le signal de fréquence des éléments binaires et, par la liaison 92, l'ordre démission provenant du circuit de commande 66. La sortie du circuit 90 est reliée à la ligne 65 par le fil 93 qui transmet en série, eb par eb, le paquet vers la partie modulation de l'équipement d'émission. La liaison 92 est également reliée à l'entrée du compteur 80 qui, ainsi, peut compter les paquets émis par le coupleur 67.

Le circuit 171 a une sortie reliée, par une liaison 173 à la partie 76 de 72 et une autre sortie reliée, par une liaison 174, à l'entrée de commande de lecture de la mémoire tampon 170. La mémoire 170 est une mémoire dont le contenu se vide dans la partie 77 de 72 à chaque ordre de lecture provenant de 171.

Le circuit 171, montré à la fig. 4, comprend quatre registres à décalage 175 à 178, quatre portes OU 179 à 182, quatre portes ET 183 à 186, une porte OU 187, un circuit de codage binaire 188 et un registre mémoire 189. Les registres 175 à 178 sont alimentés en parallèle par le fil de service »aller« de la liaison 70. Le registre 175 a ses sorties S1, S2, S3, S4, S8, . . ., S(4N), . . ., S48, reliées aux entrées de la porte OU 179. Le registre 176 a ses sorties S1, S2, S3, S5, S9, . . ., $S(4N + 1)$, . . ., S49, reliées aux entrée de la porte OU 180. Le registre 177 a ses sorties S1, S2, S3, S6, S10, . . ., $S(4N + 2)$, . . ., S50, reliées aux entrées de la porte OU 181. Le registre 178 a ses sorties S1, S2, S3, S7, S11, . . ., $S(4N + 3)$, . . ., S51, reliées aux entrées de la porte OU 182. Le codeur 188 comporte seize entrées E0, E1, E2, E3, E4, E5, . . ., E(4N), . . ., E48. L'entrée de compte E1 est reliée, en parallèle, aux sorties S1 des registres 175 à 178; d'une manière similaire, les entrées E2 et E3 de 188 sont respectivement reliées, en parallèle, aux sorties S2 et S3 de ces registres. L'entrée E4 de 188 est reliée, en parallèle, aux sorties S4 de 175, S5 de 176, S6 de 177 et S7 de 178. De même, l'entre EN de 188 est reliée, en parallèle, aux sorties S(4N) de 175, $S(4N + 1)$ de 176, $S(4N + 2)$ de 177 et $S(4N + 3)$ de 178. Le codeur 188 transmet, en code binaire, par la liaison 173, le rang de sa dernière entrée activée, à la partie 76 de 72 pour former l'octet de format, au moment de la transmission du paquet de la mémoire 72 à la ligne 65 pour télédiffusion.

Par ailleurs, la mémoire 189 a son entrée de données reliée à la liaison 172 et quatre sorties L1 à L4 respectivement reliées aux premières entrées des portes ET 183 à 186. Par la liaison 172, la ligne 65, suivant l'ordre donné par l'opérateur du gérant, transmet un ordre que fait marquer l'une des sorties L1 à L4. Les sorties des portes OU 179 à 182 sont respectivement reliées aux secondes entrées des portes ET 183 à 186. Les sorties des portes ET 183 à 186 sont reliées aux entrées correspondantes de la porte OU 187 dont la sortie est reliée à la liaison 174 vers l'entrée de lecture de la mémoire tampon 170.

Si, par exemple, on suppose que la sortie L1 de 189 est marquée, à chaque octet transmis par 170 à la partie 77 de 72, le registre à décalage 175 avance. Chaque fois que le nombre d'octets ainsi transmis correspond à une des sorties (S1, S2, S3, . . ., S(N), . . ., S48) de 175, la porte OU 179 transmet, par la porte ET ouverte par L1, un signal qui, à travers la porte OU 189, est ransmis à l'entrée de lecture de 170 qui se vide. Il apparaît donc que le nombre d'octets dans la partie 77 ne peut être que »0«, »1«, »2«, »3«, »4«, . . ., »4N«, . . ., ou »48«. Il ne peut donc y a avoir que seize valeurs de nombres d'octets possibles dans 77, ce que le codeur 188 peut coder avec quatre éléments binaires. Si, par exemple, la sortie L2 de 189 est marquée, ce sont les sorties du registre 176 qui détermine les instants de lecture de 170. Là encore le nombre de ces instants de lecture limite à seize le nombre des valeurs possibles des nombres d'octets dans 77. Il en résulte qu'en fonction des sorties marquées de 189, on peut établir les

4

quatre listes de nombres d'octets indiquées dans le tableau suivant.

Tableau

| b8 | b6 | b4 | b2 | liste 1 L1 | liste 2 L2 | liste 3 L3 | liste 4 L4 |
|----|----|----|----|------------|------------|------------|------------|
| 0 | 0 | 0 | 0 | 0 | 0 | 0 | 0 |
| 0 | 0 | 0 | 1 | 1 | 1 | 1 | 1 |
| 0 | 0 | 1 | 0 | 2 | 2 | 2 | 2 |
| 0 | 0 | 1 | 1 | 3 | 3 | 3 | 3 |
| 0 | 1 | 0 | 0 | 4 | 5 | 6 | 7 |
| 0 | 1 | 0 | 1 | 8 | 9 | 0 | 11 |
| 0 | 1 | 1 | 0 | 12 | 13 | 14 | 15 |
| 0 | 1 | 1 | 1 | 16 | 17 | 18 | 19 |
| 1 | 0 | 0 | 0 | 20 | 21 | 22 | 23 |
| 1 | 0 | 0 | 1 | 24 | 25 | 26 | 27 |
| 1 | 0 | 1 | 0 | 28 | 29 | 30 | 31 |
| 1 | 0 | 1 | 1 | 32 | 33 | 34 | 35 |
| 1 | 1 | 0 | 0 | 36 | 37 | 38 | 39 |
| 1 | 1 | 0 | 1 | 40 | 41 | 42 | 43 |
| 1 | 1 | 1 | 0 | 44 | 45 | 46 | 47 |
| 1 | 1 | 1 | 1 | 48 | 49 | 50 | 51 |

Pour des longueurs de bloc L allant de 0 à 3, les listes sont identiques; au-dessus de »3«, elles obéissent aux relations suivantes:

| Liste 1 | $L = 4N$ |
|---------|----------|
| Liste 2 | $L = 4N + 1$ |
| Liste 3 | $L = 4N + 2$ |
| Liste 4 | $L = 4N + 3$ |

On voit que, considérées globalement, les quatre listes ci-dessus permettent de choisir toute taille maximale de bloc jusqu'à une valeur de »51«. Ainsi la liberté de choix de la fréquence élément binaire qui était acquise en utilisant le système décrit dans le 1er certificat d'addition est donc préservée intégralement.

Le fonctionnement du coupleur 67 est pratiquement le même que celui du 1er certificat d'addition FR-A-2 393 480, sauf en ce qui concerne les circuits 170 et 171.

Avant l'envoi d'informations provenant d'une source particulière, la décision est prise de fixer la longueur maximale des blocs, ce qui détermine la liste 1, 2, 3 ou 4 qui va être utilisée. L'opérateur fait alors transmettre par 65 et 172 l'ordre de marquer la sortie correspondante dans la mémoire 189. Une des portes ET 179 à 182 est alors ouverte pour laisser passer les ordres de lecture du registre correspondant vers 170.

Par ailleurs, l'opérateur fait écrire dans la mémoire 82 le nombre représentant la taille maximale choisie.

On sait que la mémoire 72 est vidée vers 65, quand l'émission du paquet est autorisée et quand l'une des conditions suivantes se présente. Soit le nombre d'octets introduit dans 77 égale la valeur maximale écrite dans 82, soit le simulateur 85 a fait passer le compteur 87 en position »4« avant que le nombre maximal soit atteint. Dans les deux cas, le circuit 71 arrête la transmission sur la liaison 70 car son entrée de commande est inhibée par 83. Il peut avoir un nombre quelconque d'octets, entre 0 et 4, dans la mémoire tampon 170; ils y restent pour être transférer dans 77 à l'occasion de la formation du paquet suivant. Les registres 175 à 178 sont remis à zéro par leurs entrées RAZ à chaque transmission d'un paquet.

Il faut encore noter que l'opérateur de la source associée au coupleur considéré ne transmet toujours que des données significatives et qu'il n'a pas à se préoccuper du nombre Mmax, ni de la fréquence de transmission des éléments binaires.

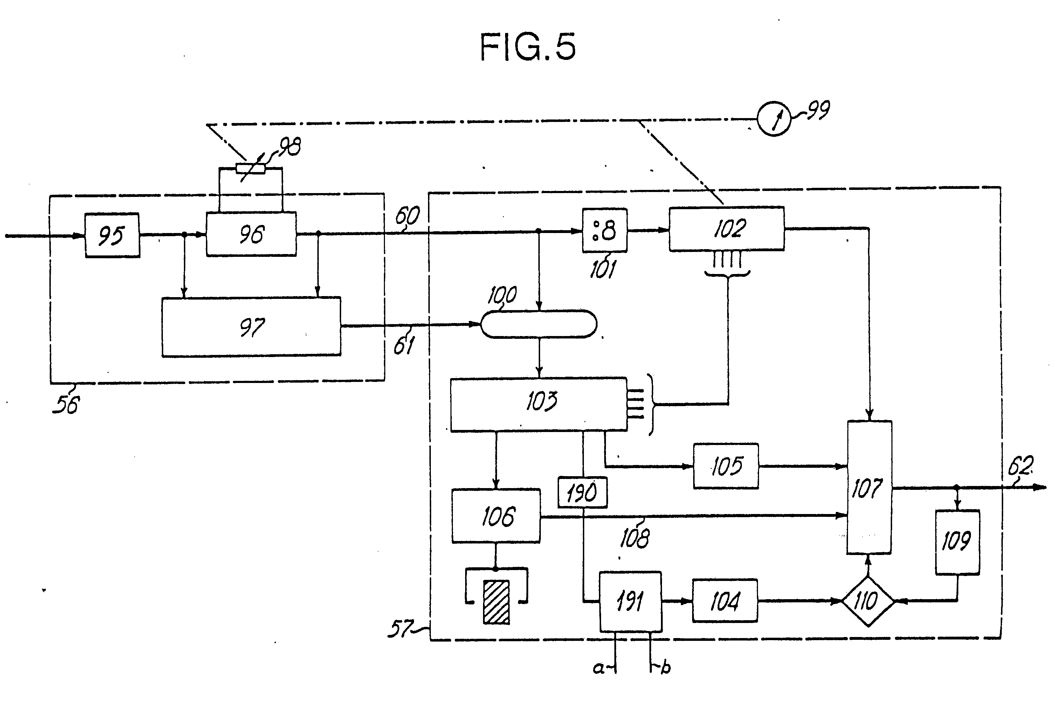

La partie démodulation d'un équipement de réception d'abonné est montré à la fig. 5. Les signaux vidéo sortant du récepteur de télévision 44 sont appliqués à un circuit d'adaptation d'impédance 95 dont le signal de sortie est appliqué, d'une part, à un circuit 96 de récupération de la fréquence des éléments binaires et, d'autre part, à un circuit de synchronisation 97. Le circuit de synchronisation 97 comporte les circuits portant les références numériques à la fig. 5 du brevet principal et sert à reconnaître notamment l'octet de début de manière à ne transmettre à la partie logique 57, par la liaison 61 que le quatrième octet de chaque paquet et les suivants. Le circuit 96 comporte, comme les circuits classiques de récupération de la fréquence des éléments binaires, un circuit accordé comprenant un composant à impédance variable 98, qui peut être une varicap, dont l'impédance est commandée par le sélecteur de canal de télévision 99. Le circuit 96 délivre le signal de fréquences des éléments binaires, d'une part, au circuit de synchronisation 97 et, d'autre part, au circuit 57 par la liaison 60.

Dans le circuit 57, le signal à la fréquence des ebs est appliqué, d'une part, à un registre d'octet 100 et, d'autre part, à un diviseur par huit 101 dont la sortie est reliée à l'entrée d'un compteur d'octets 102. Les ebs du paquet sont appliqués par 61 en série à l'entrée de données du registre d'octets 100 qui transmet les octets en parallèle à un circuit d'aiguillage 103. Le compteur d'octets 102 a ses six premières sorties correspondant aux six premiers octets reçus dans 57, c'est à dire aux octets 4 à 9, reliées à des entrées de commande du circuit d'aiguillage 103, dont les entrées activées successivement ont pour effet d'orienter successivement les octets du paquet vers le circuit de validation 106 pour les octets 4, 5, 6 et 7, vers un circuit de correction de Hamming 190 pour l'octet 8, et vers une mémoire tampon de données 105 pour les octets suivants. La sortie du circuit de correction 190 est reliée à l'entrée d'un circuit de transcodage 191 dont la sortie est reliée au registre de format 104.

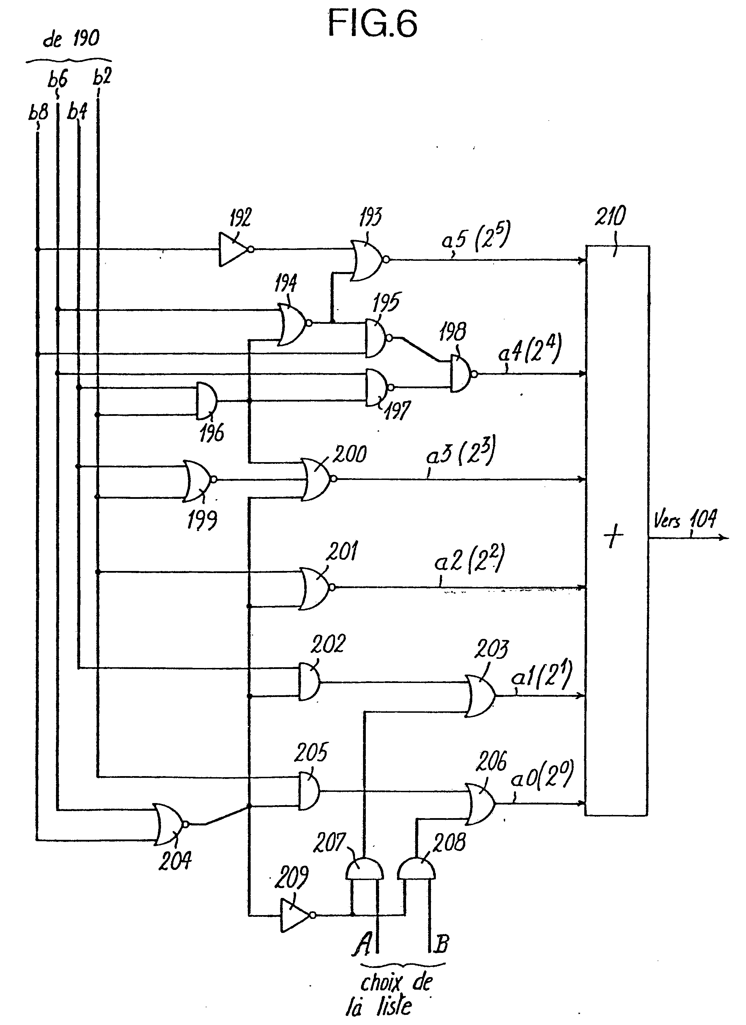

Le circuit de validation 106 peut comprendre les circuits 168, 179, 166, 171, 167 montrés à la fig. 6 du brevet français 2 313 825 et, éventuellement les circuits 173 et 174 de cette même figure.

La sortie de la mémoire tampon 105 est reliée à l'entrée d'un circuit d'aiguillage 107 qui peut être activé par une liaison 108 provenant de 106. La sortie de 107 est reliée à une jonction 62, du type de la jonction 70 de la fig. 3, qui est reliée à l'équipement d'utilisation 63. Un fil de la jonction 62 est relié à l'entrée d'un compteur 109 comptant les octets transmis par 107 et dont la sortie est reliée à une entrée d'un comparateur 110 dont l'autre entrée est reliée à la sortie du registre de format 104 et dont la sortie est reliée à une entrée d'inhibition du circuit 107. Enfin, la sortie du compteur d'octets 102 est reliée à une entrée de validation du circuit 107.

Le compteur 102 active sa sortie quand il atteint le compte Nmax. A ce moment, la mémoire tampon 105 a reçu Nmax octets dont éventuellement seuls P octets de paquet sont valables, P représentant la longueur totale du paquet. En supposant que le circuit 106 valide le paquet, dès que le compteur 102 valide sa sortie, les octets peuvent être transférés de 105 à 62 par l'intermédiaire de 107. Dès que P octets ont été ainsi transférés, les entrées du comparateur 110 ont des valeurs égales et la sortie de 110 interdit toute autre transmission de 105 à 62, pour la ligne de télévision considérée qui sert de support au paquet.

Dans le circuit de la fig. 5, le circuit de correction de Hamming est un circuit classique qui ne sera pas décrit, tandis que le circuit de transcodage 191 permet à partir des ebs b2, b4, b6 et b8 de l'octet de format de retrouver la longueur réelle du bloc, qui est transmise à 104. A titre d'exemple, le circuit 191 peut être prévu sous la forme indiquée à la fig. 6.

Dans le circuit de la fig. 6, les fils d'entrée b2, b4, b6 et b8 transmettent les quatre éléments binaires délivrés par le circuit de correction 190, dans l'ordre croissant des poids. Le fil d'entrée b8 est relié, d'une part, à l'entrée d'un inverseur 192 dont la sortie est reliée à une entrée d'une porte NOR 193 dont la sortie délivre un signal de valeur $2^5$ ou 0 sur le fil a5, et, d'autre part, à une entrée d'une porte NAND 195 dont la sortie est reliée à une entrée d'une porte NAND 198 dont la sortie délivre un signal de valeur $2^4$ ou 0 sur le fil a4. Le fil d'entrée b6 est relié, d'une part, à une entrée d'une porte NOR 194 dont la sortie est reliée à la seconde entrée de la porte NAND 195 et à la seconde entrée de la porte NOR 193 et, d'autre part, à une entrée d'une porte NAND 197 dont la sortie est reliée à la seconde entrée de la porte NAND 198. Le fil d'entrée b4 est relié, d'une part, à une entrée d'une porte ET 196 dont la sortie est reliée à la seconde entrée de la porte NOR 194, à la seconde entrée de la porte NAND 197 et à la première entrée d'une porte NOR à trois entrée 200, et, d'autre part, à la première entrée d'une porte NOR 199 dont la sortie est reliée à la seconde entrée de la porte NOR 200 dont la sortie délivre une signal de valeur $2^3$ ou 0 sur le fil a3. Le fil d'entrée b2 est relié, d'une part, à la seconde entrée de la porte NAND 196, d'autre part, à la seconde entrée de la porte NAND 199 et, enfin, à la première entrée d'une porte NOR 201 qui délivre un signal de valeur $2^2$ ou 0 sur le fil a2. Le fil d'entrée b4 est encore relié à une entrée d'une porte ET 202 dont la sortie est reliée à un entrée d'une porte OU 203 qui délivre un signal de valeur $2^1$ ou 0 sur le fil a1. Le fil d'entrée b2 est encore relié à la première entrée d'une porte ET 205 dont la sortie est reliée à une entrée d'une porte OU 206 qui délivre un signal de valeur $2^0$ ou 0 sur le fil a0. Le fil b6 est encore relié à une entrée d'une porte NOR 204 dont la sortie est reliée, en parallèle, à la troisième entrée de la porte NOR 200, à la seconde entrée de la porte NOR 201, à la seconde entrée de la porte ET 202, à la seconde entrée de la porte ET 205 et à l'entrée d'un inverseur 209. La sortie de l'inverseur 209 est reliée aux premières entrées de deux portes ET 207 et 208. La sortie de la porte 207 est reliée à la seconde entrée de la porte OU 203 et la sortie de la porte 208 est reliée à la seconde entrée de la porte OU 206. Les secondes entrées des portes ET 207 et 208 sont respectivement relies à deux fils de commande A et B.

Les valeurs des sorties a5 à a0 sont additionnées dans l'additionneur 210 avant d'être appliqué au circuit 104.

Il apparaît qu'avec la table de vérité suivante:

| A | B | |
|---|---|---|
| 0 | 0 | liste 1 |
| 0 | 1 | liste 2 |
| 1 | 0 | liste 3 |
| 1 | 1 | liste 4 |

où A et B représentent les éléments binaires qui peuvent être appliqués aux bornes A et B par les utilisateurs du récepteur, le transcodage des ebs b8, b6, b4 et b2 par 191 donne le les résultats indiqués dans le tableau II ci-après.

Il faut noter que le transcodage porte essentiellement sur l'obtention des signaux de la liste 1, en considérant que ceux de la liste 2 s'en déduisent en ajoutant une unité aux nombres à partir de 0100, puis ceux de la liste 3 en ajoutant deux unités, et, enfin, ceux de la liste 4 en ajoutant trois unités. En ce qui concerne les moyens mis en oeuvre dans le circuit de la fig. 6, il faut noter que, pour obtenir les trois dernières listes, il suffit d'ajouter aux moyens nécessaires pour obtenir la liste 1, les deux portes ET 207 et 208, plus l'inverseur 209.

Si l'on considère à nouveau le préfixe d'un paquet, il apparaît que le choix de la liste doit être convenu à l'avance entre l'opérateur à lémission et les utilisateurs. Il suffit pour cela de faire connaître par un moyen de grande diffusion: journal ou sommaire télévisé, le code AB à former par chaque utilisateur, par exemple, au moyen de clés sur le clavier de l'appareil.

Par ailleurs, on notera que, dans le préfixe, l'indice de continuité, quand il existe, ne doit également occuper qu'un seul octet de service, ce qui implique, si l'on veut pouvoir corriger une erreur de transmission sur un élément binaire, que la numérotation des paquets va de 0 à 15, puis est reprise cycliquement.

Bien entendu, le circuit de la fig. 4 ne représente qu'un exemple de réalisation. Dans la pratique, avec les techniques modernes, il serait réalisé, ainsi que l'ensemble du coupleur, en utilisant un microprocesseur.

7

| b8 | b6 | b4 | b2 | Liste 1 | | | | | | Liste 2 | | | | | | Liste 3 | | | | | | Liste 4 | | | | | |
|---|---|---|---|---|---|---|---|---|---|---|---|---|---|---|---|---|---|---|---|---|---|---|---|---|---|---|---|
| | | | | $2^5$ | $2^4$ | $2^3$ | $2^2$ | $2^1$ | $2^0$ | $2^5$ | $2^4$ | $2^3$ | $2^2$ | $2^1$ | $2^0$ | $2^5$ | $2^4$ | $2^3$ | $2^2$ | $2^1$ | $2^0$ | $2^5$ | $2^4$ | $2^3$ | $2^2$ | $2^1$ | $2^0$ |
| 0 | 0 | 0 | 0 | | | 0 | 0 | 0 | 0 | | | 0 | 0 | 0 | 0 | | | 0 | 0 | 0 | 0 | | | 0 | 0 | 0 | 0 |
| 0 | 0 | 0 | 1 | | | 0 | 0 | 0 | 1 | | | 0 | 0 | 0 | 1 | | | 0 | 0 | 0 | 1 | | | 0 | 0 | 0 | 1 |
| 0 | 0 | 1 | 0 | | | 0 | 0 | 1 | 0 | | | 0 | 0 | 1 | 0 | | | 0 | 0 | 1 | 0 | | | 0 | 0 | 1 | 0 |
| 0 | 0 | 1 | 1 | | | 0 | 0 | 1 | 1 | | | 0 | 0 | 1 | 1 | | | 0 | 0 | 1 | 1 | | | 0 | 0 | 1 | 1 |
| 0 | 1 | 0 | 0 | | | 0 | 1 | 0 | 0 | | | 0 | 1 | 0 | 1 | | | 0 | 1 | 1 | 0 | | | 0 | 1 | 1 | 1 |
| 0 | 1 | 0 | 1 | | | 1 | 0 | 0 | 0 | | | 1 | 0 | 0 | 1 | | | 1 | 0 | 1 | 0 | | | 1 | 0 | 1 | 0 |
| 0 | 1 | 1 | 0 | | | 1 | 1 | 0 | 0 | | | 1 | 1 | 0 | 1 | | | 1 | 1 | 1 | 0 | | | 1 | 1 | 1 | 1 |
| 0 | 1 | 1 | 1 | | 1 | 0 | 0 | 0 | 0 | | 1 | 0 | 0 | 0 | 1 | | 1 | 0 | 0 | 1 | 0 | | 1 | 0 | 0 | 1 | 1 |
| 1 | 0 | 0 | 0 | | 1 | 0 | 1 | 0 | 0 | | 1 | 0 | 1 | 0 | 1 | | 1 | 0 | 1 | 1 | 0 | | 1 | 0 | 1 | 1 | 1 |
| 1 | 0 | 0 | 1 | | 1 | 1 | 0 | 0 | 0 | | 1 | 1 | 0 | 0 | 1 | | 1 | 1 | 0 | 1 | 0 | | 1 | 1 | 0 | 1 | 1 |
| 1 | 0 | 1 | 0 | | 1 | 1 | 1 | 0 | 0 | | 1 | 1 | 1 | 0 | 1 | | 1 | 1 | 1 | 1 | 0 | | 1 | 1 | 1 | 1 | 1 |
| 1 | 0 | 1 | 1 | 1 | 0 | 0 | 0 | 0 | 0 | 1 | 0 | 0 | 0 | 0 | 1 | 1 | 0 | 0 | 0 | 1 | 0 | 1 | 0 | 0 | 0 | 1 | 1 |
| 1 | 1 | 0 | 0 | 1 | 0 | 0 | 1 | 0 | 0 | 1 | 0 | 0 | 1 | 0 | 1 | 1 | 0 | 0 | 0 | 1 | 0 | 1 | 0 | 0 | 0 | 1 | 1 |
| 1 | 1 | 0 | 1 | 1 | 0 | 1 | 0 | 0 | 0 | 1 | 0 | 1 | 0 | 0 | 1 | 1 | 0 | 1 | 0 | 1 | 0 | 1 | 0 | 1 | 0 | 1 | 1 |
| 1 | 1 | 1 | 0 | 1 | 0 | 1 | 1 | 0 | 0 | 1 | 0 | 1 | 1 | 0 | 1 | 1 | 0 | 1 | 1 | 1 | 0 | 1 | 0 | 1 | 1 | 1 | 1 |
| 1 | 1 | 1 | 1 | 1 | 1 | 0 | 0 | 0 | 0 | 1 | 1 | 0 | 0 | 0 | 1 | 1 | 1 | 0 | 0 | 1 | 0 | 1 | 1 | 0 | 0 | 1 | 1 |

0 026 708

**0 026 708**

## Revendications

1. Système de diffusion de données dans lequel la station émettrice (41) diffuse, sous forme de paquets, des données numériques provenant éventuellement de plusieurs voies, chaque paquet comportant un préfixe contenant, outre des signaux de synchronisation classiques et de code d'identification de voie, un signal de format de paquet indiquant la longueur de la suite de données qui suit le préfixe, la station émettrice (41) comportant autant de coupleurs (67) que de voies, chaque coupleur (67) comprenant un circuit d'entrée dont l'entrée est reliée à la sortie de la voie associée au coupleur et dont la sortie est reliée à l'entrée d'une mémoire de données (72) dont la sortie peut être connectée à un circuit de multiplexage (65) sous la commande (66) d'un circuit de commande commun à tous les coupleurs, et un compteur (87) alimenté à une cadence prédéterminée, l'ordre d'inhibition du circuit d'entrée (71) étant donné soit dès que ladite mémoire (72) est pleine, soit dès que ledit compteur (87) à atteint un compte prédéterminé, après quoi ladite mémoire (72) est connectée au circuit (65) de multiplexage, puis vidée, ledit compteur (87) est remis à zéro et l'ordre d'inhibition supprimé, caractérisé en ce qu'entre ladite mémoire (72) et ledit circuit d'entrée (71) est prévue une mémoire tampon (170) de petite capacité, la lecture des données de la mémoire tampon (170) étant commandée par un programmateur (171).

2. Equipement de réception du système de diffusion de données, utilisé dans un système suivant la revendication 1, dans lequel les signaux qui suivent le préfixe, quand celui-ci est y accepté, sont envoyés dans une mémoire tampon (105) dont la sortie est reliée à un circuit de sortie (107), avec un registre de signal de format (104) emmagasinant le signal de format du préfixe de chaque paquet reçu et un compteur (102) alimenté par un signal d'horloge à la fréquence des ebs qui, quand il atteint un compte maximal, vide la séquence des données de la mémoire tampon (105) dans le circuit de sortie (107), la longueur de la séquence étant limitée par le contenu dudit registre de format (104), caractérisé en ce que le registre de format (104) est alimenté par un circuit de transcodage (191) traitant le signal de format diffusé.

## Patentansprüche

1. System zur Ausbreitung von Daten, in dem die Sendestation (41) numerische, gegebenenfalls von mehreren Wegen kommende Daten in Form von Paketen ausbreitet und jedes Paket einen Vor-Code enthält, der außer bekannten Synchronisationssignalen und einem Identifikations-Code für den Weg ein Paketformat-Signal enthält, das die Länge der dem Vor-Code folgenden Datenfolge anzeigt, wobei die Sendestation (41) ebensoviele Koppelpunkte (67) wie Wege enthält und jeder Koppelpunkt (67) eine Eingangsschaltung aufweist, deren Eingang mit dem Ausgang des dem Koppelpunkt zugeordneten Weges und dessen Ausgang mit dem Eingang eines Datenspeichers (72) verbunden ist, dessen Ausgang durch Steuerung von einer allen Koppelpunkten gemeinsamen Steuerschaltung (66) an eine Multiplexschaltung (65) angeschlossen werden kann, mit einem Zähler (87), der mit einem vorbestimmten Takt gespeist wird, wobei der Sperrzustand der Eingangsschaltung (71) gegeben ist entweder, sobald der genannte Speicher (72) voll ist oder sobald der genannte Zähler (87) ein vorbestimmtes Zählergebnis erreicht hat, wonach der genannte Speicher (72) mit der Multiplexschaltung (65) verbunden wird und nach Entleerung der genannte Zähler (87) auf Null zurückgestellt und der Sperrbefehl unterdrück wird, dadurch gekennzeichnet, daß zwischen dem genannten Speicher (72) und der genannten Eingangsschaltung (71) ein Pufferspeicher (170) geringer Kapazität vorgesehen ist und das Lesen der Daten aus dem Pufferspeicher (170) durch eine Programmiereinheit (171) gesteuert ist.

2. Empfangsgerät eines Daten-Ausbreitungssystems zur Anwendung in einem System nach Anspruch 1, in dem die dem Vor-Code folgenden Signale, wenn dieser dort empfangen wird, in einen Pufferspeicher (105) eingegeben werden, dessen Ausgang mit einer Ausgangsschaltung (107) verbunden ist, mit einem Register (104) für ein Formatsignal, das das Formatsignal der Vor-Codes jedes empfangenen Paketes speichert, und mit einem Zähler (102), der durch ein Zeitsignal mit der Frequenz der Bits gespeist wird und der, wenn er ein maximales Zählergebnis erreicht, die Datenfolge von dem Pufferspeicher (105) in die Ausgangsschaltung (107) führt, wobei die Länge der Folge durch den Inhalt des genannten Format-Registers (104) begrenzt ist, dadurch gekennzeichnet, daß das Format-Register (104) von einer Transcodier-Schaltung (191) gespeist ist, die das ausgebreitete Formatsignal behandelt.

## Claims

1. Data broadcasting system in which the transmitting station (41) broadcasts under the form of a packet digital data provided possibly from several channels each packet comprising a prefix including, besides conventional synchronisation signals and channel identification code, a packet format signal indicating the length of the sequence of data which follows the prefix, the transmitting station (41)

9

having as many couplers (67) as channels, each coupler (67) comprising an input circuit the input of which is connected from the output of the channel associated with the coupler and the output of which is connected to the input of a data memory (72) the output of which may be connected to a multiplexing circuit (65) under the control (66) of a control circuit common to all the couplers, and a counter (87) fed at a predetermined rate, the order or inhibition of the input circuit (71) being given either when the said memory (72) is full or when the said counter (87) has reached a predetermined amount after which the said memory (72) is connected to the multiplexing circuit (65), then is read out, the said counter (87) is reset to zero and the order of inhibition is cancelled, characterized in that between the said memory (72) and the said input circuit (71) there is provided a buffer memory (170) of small capacity data read-out from the buffer memory (170) being controlled by a programmer (171).

2. Receiving equipment of the data broadcasting system used in a system according to claim 1 wherein the signals which follow the prefix when the latter has been accepted therein, are transmitted into a buffer memory (105) the output of which is connected to an output circuit (107), with a signal format register (104) storing the format signal of the prefix of each packet received and a counter (102) fed by a clock signal at the bit frequency which when it reaches a maximum amount reads out the sequence of data from the buffer memory (105) into the output circuit (107), the length of the sequence being limited by the contents of the said format register (104), characterized in that the said format register (104) is fed by a transcoding circuit (191) treating the broadcasted format signal.

FIG.1

FIG.2

# FIG.3

0 026 708

# FIG.4

FIG.5

62

109

107

110

99

102

105

104

101

:8:

191

b

a

190

108

100

103

106

60

61

98

96

97

57

95

56

# FIG.6